Europäisches Patentamt

European Patent Office

Office européen des brevets

(19)

(11) Publication number: **0 119 074**
**B1**

(12) **EUROPEAN PATENT SPECIFICATION**

(45) Date of publication of patent specification: **07.09.88**

(51) Int. Cl.⁴: **A 01 K 93/00, A 01 K 97/00**

(21) Application number: **84301590.0**

(22) Date of filing: **09.03.84**

(54) A float and depth gauge.

(30) Priority: **10.03.83 US 474176**

(43) Date of publication of application:
**19.09.84 Bulletin 84/38**

(45) Publication of the grant of the patent:
**07.09.88 Bulletin 88/36**

(84) Designated Contracting States:
**AT CH DE FR GB IT LI NL SE**

(56) References cited:
**DE-A-1 632 977**
**DE-B-1 012 491**
**US-A-1 558 928**
**US-A-2 077 184**
**US-A-2 310 030**
**US-A-2 322 241**

(73) Proprietor: **Kessler, Theodore P.**
**122 Bridge Street**
**Rancocas New Jersey 08073 (US)**

(72) Inventor: **Kessler, Theodore P.**
**122 Bridge Street**
**Rancocas New Jersey 08073 (US)**

(74) Representative: **Jones, Michael Raymond et al**
**HASELTINE LAKE & CO. Hazlitt House 28**
**Southampton Buildings Chancery Lane**
**London WC2A 1AT (GB)**

Courier Press, Leamington Spa, England.

**Description**

This invention relates to a float and depth gauge. More particularly, this invention relates to a fishing float and depth gauge.

US—A—2077184 discloses a combination of a fishing float and a fishing line, said float having a light elongate floatation member, and at least one pair of receiving means on spaced-apart regions of the member each to define an aperture through which the fishing line is slidably received in enclosed relation.

As is known, with some types of fishing, such as in casting a fishing line into a body of water, such as a lake, or ocean, it is frequently desirable to be able to position a hook on the line at a certain level above the bottom of the lake or ocean. To this end, various types of floats have been known which can be secured onto a fishing line at predetermined locations so that when cast into the water, the float will support the hook in a suspended manner above the bottom of the body of water.

Generally, the floats which have been used are of the set-type or of the slip-type. The set-type of float is one which is usually fixed to a fishing line for use at shallow depths of water. One known set-type float has a body provided with a spring biased hook at one or both ends which can be drawn into a recess of the body in order to clamp a fishing line between the hook and body. Other known set-type floats are of similar construction. In each case, the float is fixed to the the line and is not intended to move during use. However, these floats usually have a short useful life due to corrosion and/or breakage of the moving parts. Further, these floats require complex manufacturing and assembling techniques. Also, when in use, the spring biased hooks can put an undesired crimp in a fishing line.

It is also impractical for a set float to be used for anything but shallow depths, for example, if a set float is set for the line to be (10 feet) 3,04 m or (15 feet) 4,57 m deep it would be virtually impossible to cast with a standard 5 1/2 foot or 6 foot spinning pole. Thus, a slip float must be used.

Slip-type floats are generally formed of a float body with a central bore or passage. In such cases, the fishing line is first threaded through the float body and, thereafter, one or more hooks and a sinker are applied to the end of the line. During use, such a float is able to slide along the fishing line until abutting a loop knot, a segment of rubber band or soft string, obstruction or the like in the line which acts as a stop past which the float will not pass. In the event that the float requires removal, the line is usually cut at a point above the usual tackle and a rethreading of a new float made on the line. This is, of course, wasteful of time and fishing line.

In some cases, small plastic floats have been threaded onto fishing lines to act as slip floats. However, should dirt, grit or beads of water become entrained within the floats, the floats may become jammed on the fishing line. Hence, a fishing hook may become located at a shallower depth than intended.

It has also been found that when a fishing line has been provided with a slip-type of float, one or more hooks and a sinker, accurate casting is impeded by a sliding of the float backwards on the line during flight.

It has also been known to construct floats which can be removed from a line from time to time. For example, a float can be made of two parts which are hinged together so as to sandwich a fishing line therebetween when closed. In this case, use has been made of interfitting ribs at the ends of the two paths of the float in order to clamp the fishing line to the float. In other cases, the floats have been made of two pieces which can dove-tail together in a slide fit relation so as to clamp onto a fishing line. However, in these cases, should the actual depth of the body of water be less than that estimated, the sinker and hook may well rest on the bottom in a slack manner rather than having the hook spaced above the bottom. Likewise, if the depth is greater than that estimated, the hook will be suspended far above the desired location.

Accordingly, it is an object of the invention to be able to accurately place a hook at a submerged point below the surface of a body of water for fishing purposes.

It is another object of the invention to be able to measure the depth of a body of water in a simple manner.

It is another object of the invention to provide a float which can be used for accurately measuring the depth of a body of water of fluid.

It is another object of the invention to provide a fishing float which can be readily attached to or removed from a fishing line.

It is another object of this invention to provide a float with a quick means of attaching or detaching the line from the float regardless if it is being used as a "slip" float or a "set" float.

According to a first aspect of the present invention there is provided a combination of a fishing float, and a fishing line having the feature of claim 1.

The flotation member may be of an elongated cylindrical or oblong shape and is preferably made of light-weight material such as plastic. In order to enhance the buoyancy of the float, the float is made hollow.

The flat elements are disposed in opposed relation such that the aperture is completely enclosed in a peripheral manner. In addition, the elements may be resilient to permit passage of a fishing line therebetween in transverse relation. This permits a fishing line to be inserted into the aperture when placing the float on a fishing line. Likewise, the resilient nature of the elements permits the line to pass therebetween for removal of the float from the line.

Each hook-shaped element of the float may also be provided with a transverse protruberance which projects into the plane of the adjacent element in order to retain a fishing line within the aperture defined by the elements.

The float may also be provided with a securing means intermediate of the ends of the flotation member for securing a fishing line to the member in a fixed position.

The fishing line used may be of monofilament construction, to which a sinker and one or more fish hooks may be affixed at one end. In order to apply the float, the fishing line is slid between the flat hook-shaped elements at one end of the float and then rotated 90° in order to snap into the aperture defined by these elements. In like manner, the line is fitted into the aperture defined by the hook shaped elements at the opposite end of the float. At this time, the float, fishing hooks and sinker can then be cast.

During flight of the fishing line, the tension in the fishing line is such as to clamp the line to the float so that the float, fishing hooks and sinker do not impede the casting operation.

When the cast line arrives at the desired location, on the surface of the body of water, the tension in the line relative to the float decreases. Hence, the sinker is able to fall under gravity until reaching the bottom of the body of a water while the line slides through the float which is maintained on the surface of the water. After the sinker touches the bottom, the float becomes a measure of the depth of the water at that point. Thereafter, the line is retrieved while again imparting tension to the line in order to clamp the float to the line. Once the line has been retrieved, for example up to the location of the clamped float, a certain length is measured off from this point to establish the depth at which the fishing hook is to be placed for subsequent fishing operation. Next, a rubber band, knot, or other type of tie is placed in the fishing line at this point and the remainder of the line is reeled in. Thereafter, the line is recast, and when the tie slides into abutment with the float, a fishing operation may begin. At this time, the fishing hook will be suspended from the float at a level above the bottom.

The present invention also provides an apparatus for gauging the depth of a body of water, having the features of claim 10.

The invention also provides a method of determining the depth of a fluid such as a body of water using an apparatus as described in the immediately preceding paragraph. This method comprises the steps of dropping the line, sinker and float onto the surface of the body of fluid in order to permit the sinker to fall under gravity until reaching a bottom under the body of fluid. Thereafter, the line is retrieved while imparting tension to the line to clamp the float to the line such that the latter is locked on the line at a location indicative of the depth of the body of fluid. Then, the location of the clamped float is marked on the line as a measure of the depth of the body of fluid.

For a better understanding of the present invention, and to show how the same may be carried into effect, reference will now be made to the accompanying drawings in which:

Figure 1 illustrates a view of a fishing line cast into a body of water via a fishing pole in accordance with the invention;

Figure 2 illustrates a float removably secured on a fishing line having a hook and sinker thereon in accordance with this invention;

Figure 3 illustrates an enlarged view of one end of the float and a receiving means at that end in accordance with the invention;

Figure 4 illustrates a cross-sectional view of the float of Figure 2;

Figure 5 illustrates an exploded view of the float of Figure 2;

Figure 6 illustrates a view of a fishing line and float during the measurement of the depth of a body of water;

Figure 7 illustrates a view of the fishing line and float during a retrieval operation;

Figure 8 illustrates a view of the fishing line and float during fixed securement of the fishing line to the float; and

Figure 9 illustrates a view of a fishing line and the float during a fishing operation.

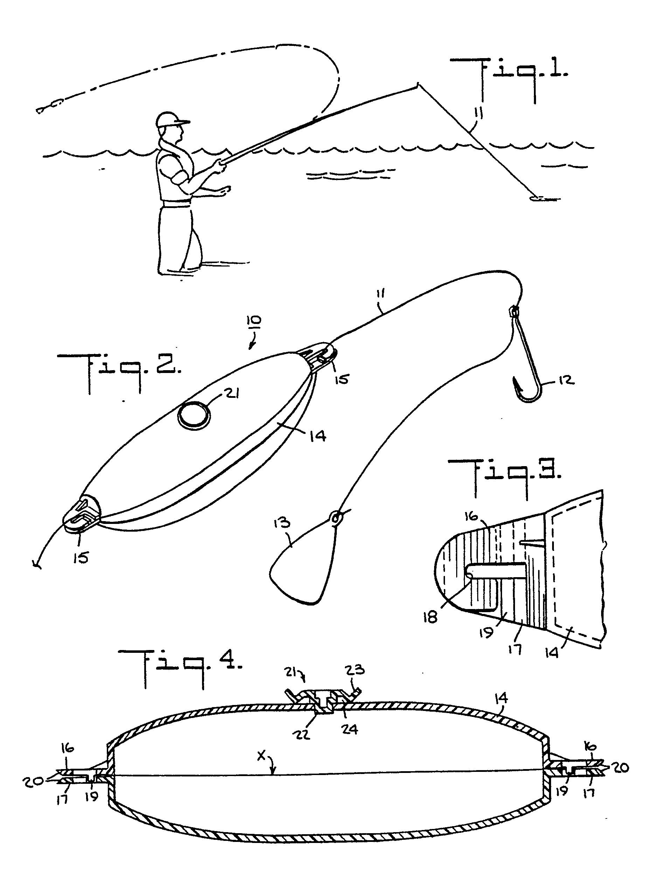

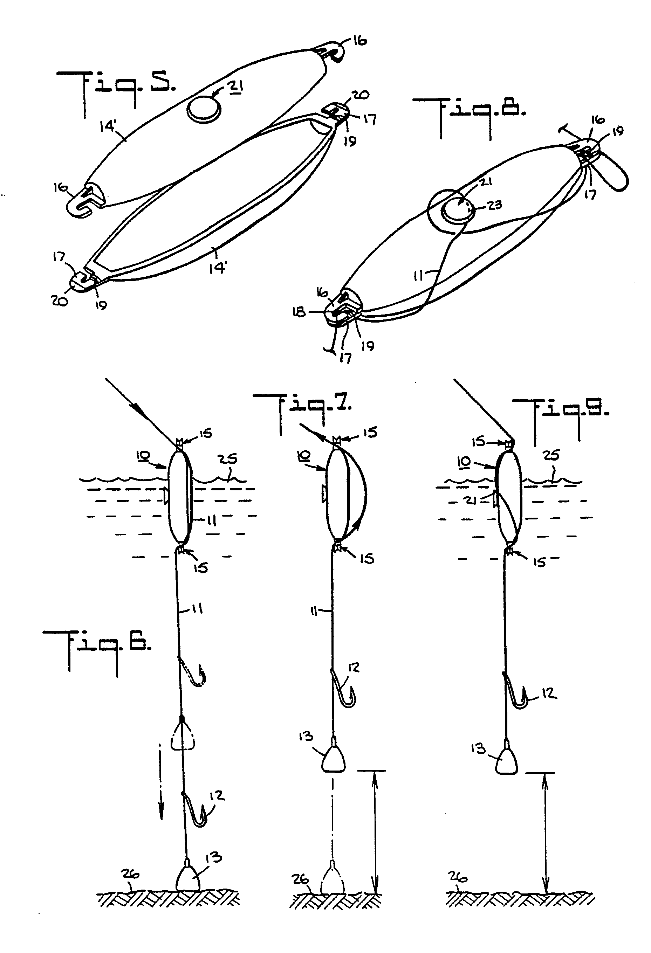

Referring to Figure 2, the float 10 is adapted to be removably secured to a fishing line 11 to which one or more hooks 12 and a sinker 13 have been secured at one end in a conventional manner. The line 11 may be of any suitable type such as a synthetic mono-filament. Like-wise, the hook 12 and sinker 13 may be of any conventional structure.

Referring to Figures 2 and 5, the float 10 includes a flotation member 14 of hollow elongated cylindrical shape and receiving means 15 mounted on opposite ends of the flotation member 14 for slidably receiving the fishing line 11 in a freely enclosed relation. As indicated in Figure 5, the flotation member 14 is made into halves 14′ which are secured together along a plane of symmetry X (see Figure 4). Each half 14′ is substantially identical to the other half 14′.

The flotation member 14 is of relatively thin-walled thickness so as to be light-weight, particularly for buoyancy. For example, the float 10 may be of various lengths, for example 0,91 m (three inches), 1,21 m (four inches) and 1,82 m (six inches). Also, the float 10 may be of light weight such as 6,52 g (0.23 ounces) for a 0,91 mm (three inch) float. The float 10 is made of any suitable material, such as polystyrene, or may be made of various mixtures of polystyrene, such as a high impact polystyrene and a crystal polystyrene.

Each receiving means 15 is formed by a pair of first hook shaped elements 16, 17 which are disposed in opposed relation so as to define an aperture 18 therebetween (see Figure 3). As indicated in Figure 4, the hook shaped elements 16, 17 are integral with and extend from the flotation member 14 on opposite sides of the plane of symmetry X. In addition, each element 16, 17 carries a transverse protuberance 19 which projects into the plane of the opposed elements. As indicated in Figure 3, each protuberance 19 substantially fills the gap between the free end of an element 16, 17 and the base of the elements 16, 17.

As shown in Figure 4, the outermost ends of the hook shaped elements 16, 17 have a chamfer 20 to define a V-shaped recess therebetween.

Referring to Figures 2 and 4, the float 10 also has a securing means 21 on the flotation member at a point intermediate the ends of the member 14 for securing the fishing line 11 thereto. As indicated in Figure 4, this securing means includes a central post 22 which protrudes from one half 14' of the flotation member 14 and a cap 23 on the post 22 which defines a recess 24 with the post 22 and the flotation member 14. The post 22 is integrally secured to the flotation member half 14' for example by thermo-welding while the cap 23 is integrally cast with the post 22. As shown in Figure 4, the cap 23 contacts the member 14 peripherally such that the recess 24 is closed. The recess 24 is also sized to retain one or more windings of the fishing line 11. For example, where the filament line 11 is of relatively large diameter only one winding need be accommodated within the recess 24 in order to secure the float 10 to the line 11 in fixed manner. Where the fishing line 11 is of relatively small diameter, two windings of the line may be accommodated within the recess 24 in order to affix the float 10 to the line 11.

In order to utilize the float 10 as a depth gauge the float is secured to the fishing line 11, for example, after the hook 12 and sinker 13 have been secured in place. At this time, the fishing line 11 is slid between the resilient hook shaped elements 16, 17 at one end of the flotation member 14' in a transverse manner (parallel to the plane of symmetry X). The line 11 is then passed about the free ends of the elements 16, 17 into a plane perpendicular to the plane of symmetry X. In this position, the line is free to slide within the elongated aperture 18 formed by the elements 16, 17. A similar operation is then carried out to insert the line within the aperture 18 defined by the elements 16, 17 at the opposite end of the flotation member 14 (see Figure 2). At this time, the float 10, line 11, hook 12 and sinker 13 can be cast onto the surface of a body of water 25. During flight, the tension in the line 11 is sufficient to clamp the float 10 to the line 11. This may well be due to the aerodynamic shape of the float 10, the light weight of the float 10 and the frictional forces between the line 11 and float 10. In any event, the float 10 remains in place until arriving at the desired location on the water 25.

Referring to Figure 6, upon dropping onto the surface of the water 25, the sinker 13 falls under gravity until reaching the bottom 26. At the same time, the line 11 slides through the apertures 18 at the ends of the float 10 while the float 10 remains on the surface of the water 25. In this respect, upon reaching the surface of the water 25, the line relaxes relative to the float 10 so that the float 10 permits the line 11 to slide therethrough.

After the sinker 13 touches the bottom 26, the line 11 again is tensioned due to the weight of the suspended sinker 13 so that the float 10 is again clamped to the line 11 (see Figure 7). The location of the float 10 on the line 11 is thus indicative of the depth of the body of water 25.

After the line 11 has been retrieved up to the location of the clamped float 10, a suitable means such as a tie, rubber band or the like is placed in the line 11 at a point spaced from the float to establish the depth at which the hook 12 is to be located for fishing. That is, this operation permits the fishing hook 12 to be located at a fixed point above the bottom 26 of the water 25. Next, the fishing line 11 is again recast with the float 10 again being held on the line. However, upon impact with the water surface, the line 11 slides through the float 10 up to the location of the tie (see Figure 9). That is, upon reaching the desired location, the sinker 13 will be suspended above the bottom 26 while the fishing hook 12 is located at the desired fishing height.

In the event that the fishing line is to be used at a different location, the float 10 can again be used as a depth gauge to measure the depth of a different location in the body of water. Of course, any tie which has been formed on the fishing line can be readily removed.

Should it be necessary to fix the float 10 to the fishing line 11 for fishing purposes, the line 11 is simply snapped under the cap 23. In this respect, the inherent resilience of the cap 23 is sufficient to hold the float 10 on the line 11. If further securement is needed, the line 11 may be wound about the post 22 as indicated in Figure 8 to form one or more windings.

In the event that the float 10 is to be removed from the fishing line 11, removal can be carried out in a relatively simple manner. For example, a length of the line 11 leading from the float 10 may be doubled over on itself (see Figure 8) and slid into the aperture 18 in a manner as above. This results in a loop being formed in the line, which loop extends to one side of the float 10. The loop may then be drawn through the aperture 18 so that the float 10 is released from the line 11 at this end. A similar operation is then carried out at the opposite end of the float 10 so that the float is completely removed.

The invention thus provides a float which provides a dual function of acting as a float which can be cast without impeding the casting operation as well as acting as a depth gauge for measuring the depth of a body of water for fluid.

The invention further provides a float of light-weight construction which can be readily removed from a fishing line without having to destroy the line.

The invention further provides a float which can be easily mounted on a fishing line for use in different depths of water.

Since the float has no moving parts, there is no danger of debris or grit clogging the float. Further, the apertures provided by the receiving means at each end of the float are exposed so that each can be readily cleaned should any material lodge therein. Still further, because of the absence of moving parts, such as springs within the float, fabrication can be carried out at low cost and the float may have a long useful life. Finally, the float does not impart any undesirable crimp in the fishing line.

## Claims

1. A combination of a fishing float (10), and a fishing line (11), said float having a light, elongate flotation member (14), and at least one pair of receiving means (15) in the form of hook-shaped elements on spaced-apart regions, preferably opposite ends, of the member (14) each to define an aperture (18) through which the fishing line (11) is slidably received in enclosed relation, characterised in that each receiving means (15) includes a pair of parallel flat hook-shaped elements (16, 17) each extending from the member (14) on opposite sides of a plane of symmetry (X) of said member and parallel to said plane, such that each pair of hook-shaped elements being in opposed relation defines an aperture (18); and in that the receiving means (15) are so arranged that at least part of the length of fishing line (11) between the apertures extends along a longitudinal outer surface of the flotation member (14) when there is tension in the line (11) to clamp the fishing line (11) to the flotation member (14), such that the latter is locked on the line (11).

2. A combination as claimed in claim 1, wherein the flotation member (14) is of elongated cylindrical shape.

3. A combination as claimed in claim 1 or 2, wherein the flotation member (14) is made of a pair of half-pieces secured together along a central plane of said member (14).

4. A combination as claimed in any preceding claims, wherein the flotation member (14) has a length of from three inches to six inches (76.2 to 152.4 mm).

5. A combination as claimed in claim 4, wherein the flotation member (14) is of thin walled thickness and has a weight of approximately 0.23 ounces (6.53 g) and a length of approximately three inches (76.2 mm)

6. A combination as claimed in any preceding claim, further comprising a securing means (21) on the member (14), intermediate the opposite ends, for securing a fishing line to the flotation member (14).

7. A combination as claimed in claim 6, wherein the securing means (21) comprises a post (22) protruding from the flotation member (14) to receive at least one winding of a fishing line (11), and a cap (23) on the post (22) defining an annular recess (24) with the post (22) and the flotation member (14), to retain the winding of a fishing line (11) therein.

8. A combination as claimed in any preceding claim, wherein the flat hook-shaped elements (16, 17) are resilient to permit passage of a fishing line (11) transversely therebetween.

9. A combination as claimed in claim 8, wherein each hook-shaped element (16, 17) includes a transverse protuberance (19) projecting into the plane of the other of the pair of elements to retain a fishing line (11) within the aperture (18) defined by the pair of elements.

10. An apparatus, for gauging the depth of a body of water, having a flexible line (11), a sinker (13) affixed to one end of the line (11), and a float (10) slidably mounted on the line (11), the float (10) including an elongate flotation member (14) and at least one pair of receiving means (15) in the form of hook-shaped elements mounted on spaced-apart regions, preferably opposite ends, of the member (14) each to define an aperture (18) through which the flexible line (11) is slidably received in enclosed relation, characterised in that each receiving means (15) includes a pair of parallel flat hook-shaped elements (16, 17) each extending from the member (14) on opposite sides of a plane of symmetry (X) of said member, and parallel to said plane, such that each pair of hook shaped elements being in opposed relation defines an aperture (18); and in that the receiving means (15) are so arranged that at least part of the length of flexible line (11) between the apertures extends along a longitudinal outer surface of the flotation member (14) when there is tension in the line (11) to clamp the flexible line (11) to the flotation member (14), such that the latter is locked on the line (11).

11. A method of determining the depth of a body of water using an apparatus as claimed in claim 10, comprising the steps dropping the line (11), sinker (12) and float (10) onto the surface of a body of water to permit the sinker (13) to fall under gravity until reaching the bottom under the body of water while sliding the line (11) through the float (10) and maintaining the float (10) on the surface; thereafter retrieving the line (11) while imparting tension to the line (11) to clamp the line (11) along a longitudinal outer surface of the flotation member (14) such that the latter is locked on the line at a location indicative of the depth of the body of water; and marking the location of the clamped float (10) on the line (11).

## Patentansprüche

1. Kombination eines Schwimmers (10) mit einer Angelschnur (11) wobei besagter Schwimmer besteht aus einem leichten, länglichen Schwimmkörper (14) und mindestens einem Paar hakenförmiger Aufnahmen (15), die zueinander in einem Abstand, vorzugsweise an gegenüberliegenden Enden des Schwimmkörpers (14) angeordnet sind und deren jedes eine Oeffnung (18) bildet, die zur gleitbaren und umschlossenen Aufnahme der Angelschnur (11) dient, dadurch gekennzeichnet, dass jede Aufnahme (15) besteht aus einem Paar paralleler, flacher, hakenförmiger Elemente (16, 17), deren jedes aus dem Schwimmkörper (14) auf entgegengesetzten Seiten einer Symmetrieebene (X) des besagten Schwimmkörpers (14) und parallel zu besagter Ebene derart herausragt, dass jeder Teil der zueinander entgegengesetzt angeordneten, hakenförmigen Elemente einen Teil der Oeffnungen (18) bildet, und wobei die Oeffnungen so angeordnet sind, dass die Angelschnur (11) zumindest in einem Teil ihrer Länge sich längs einer länglichen Aussenfläche des Schwimmkörpers (14) erstreckt, wenn die Angelschnur (11) unter Spannung steht, um die Angelschnur (11) an den Schwimmkörper (14) so zu klemmen, dass letzterer auf der Angelschnur (11) blockiert ist.

2. Kombination nach Patentanspruch 1, dadurch gekennzeichnet, dass der Schwimmkörper (14) eine längliche, zylindrische Form aufweist.

3. Kombination nach Patentanspruch 1 oder 2, dadurch gekennzeichnet, dass der Schwimmkörper (14) aus zwei Hälften besteht, die aneinander längs einer Mittelebene des Schwimmkörpers (14) befestigt sind.

4. Kombination nach einem der vorhergehenden Patentansprüche, dadurch gekennzeichnet, dass der Schwimmkörper (14) eine Länge von etwa drei bis sechs Zoll (76,2 bis 152,4 mm) aufweist.

5. Kombination nach Patentanspruch 4, dadurch gekennzeichnet, dass der Schwimmkörper (14) dünnwandig ist, sein Gewicht etwa 0,23 Unzen (6,53 g) und seine Länge etwa drei Zoll (76,2 mm) betragen.

6. Kombination nach einem der vorhergehenden Patentansprüche, dadurch gekennzeichnet, dass diese weiter Befestigungsmittel (21) enthält auf dem Körper (14) zwischen den entgegengesetzten Enden zur Befestigung einer Angelschnur (11) am Schwimmkörper (14).

7. Kombination nach Patentanspruch 6, dadurch gekennzeichnet, dass die Befestigungsmittel (21) aus einer Stütze (22) bestehen, die aus dem Schwimmkörper (14) herausragt, um mindestens eine Windung der Angelschnur (11) aufzunehmen, und des weiteren aus einer Kappe (23) auf der Stütze (22), durch die eine ringförmige Ausnehmung (24) mit der Stütze (22) und dem Schwimmkörper (14) gebildet wird, um die darin liegende Windung der Angelschnur (11) zurückzuhalten.

8. Kombination nach einem der vorhergehenden Patentansprüche, dadurch gekennzeichnet, dass die flachen, hakenförmigen Elemente (16, 17) federnd sind, damit die Angelschnur (11) quer durch sie durchlaufen kann.

9. Kombination nach Patentanspruch 8, dadurch gekennzeichnet, dass das hakenförmige Element (16, 17) eine Querauskragung (19) aufweist, die in die Ebene des anderen der beiden Elemente ragt zur Aufnahme der Angelschnur (11) in der Oeffnung (18), die durch das Elementenpaar gebildet wird.

10. Gerät zur Messung der Tiefe eines stehenden Gewässers mit einer flexiblen Leine (11), einem an einem Ende der Leine (11) befestigten Sinkkörper (13) und einem Schwimmer (10), der gleitbar an der Leine (11) befestigt ist, wobei der Schwimmer (10) besteht aus einem länglichen Schwimmkörper (14) und mindestens einem Paar hakenförmiger Aufnahmen (15), die zueinander in einem Abstand, vorzugsweise an gegenüberliegenden Enden des Schwimmkörpers (14) angeordnet sind und deren jede eine Oeffnung (18) bildet, die zur gleitbaren und umschlossenen Aufnahme der flexiblen Leine (11) dient, dadurch gekennzeichnet, dass jedes Befestigungsmittel (15) besteht aus einem Paar paralleler, flacher, hakenförmiger Elemente (16, 17), deren jedes aus dem Schwimmkörper (14) auf entgegengesetzten Seiten einer Symmetrieebene (X) des besagten Schwimmkörpers (14) und parallel zu besagter Ebene derart herausragt, dass jeder Teil der zueinander entgegengesetzt angeordneten, hakenförmigen Elemente einen Teil der Oeffnungen (18) bildet, und wobei die Oeffnungen so angeordnet sind, dass die Leine (11) zumindest in einem Teil ihrer Länge sich längs einer länglichen Aussenfläche des Schwimmkörpers (14) erstreckt, wenn die Leine (11) unter Spannung steht, um die Leine (11) an den Schwimmkörper (14) so zu klemmen, dass letzterer auf der Leine (11) blokkiert ist.

11. Verfahren zur Ermittlung der Tiefe eines stehenden Gewässers, bestehend aus den Schritten des Werfens der Leine (11), des Sinkkörpers (12 und Schwimmers (10) auf die Oberfläche eines stehenden Gewässers, damit der Sinkkörper (13) zufolge der Wirkung der Schwerkraft so lange absinkt bis er den Grund des stehenden Gewässers erreicht hat, während die Leine (11) durch den Schwimmer (10) gleitet und den Schwimmer (10) an der Oberfläche hält; danach Zurückziehen der Leine (11) zum Klemmen der Leine (11) an einer länglichen Aussenfläche des Schwimmkörpers (14) in der Weise, dass dieser auf der Leine an einer Stelle blockiert wird, die ein Mass für die Tiefe des stehenden Gewässers bildet; und Markieren der Stelle, an der der Schwimmer (10) auf der Leine (11) klemmt.

**Revendications**

1. Combinaison d'un flotteur de pêche (10) et d'une ligne de pêche (11), ledit flotteur comportant un élément flottant léger et allongé (14) et au moins une paire de moyens récepteurs (15) constitués d'éléments en forme de crochets, ces éléments étant espacés et disposés de préférence aux deux extrémités de l'élément (14) pour y constituer une ouverture (18) dans laquelle peut glisser une ligne de pêche captive (11), caractérisée en ce que chaque moyen récepteur (15) comporte une paire d'éléments parallèles, plats et en forme de crochets (16, 17) qui se font face, qui partent tous deux de l'élément (14) et qui sont situés chacun sur un côté d'un plan de symétrie (X) dudit élément (14) tout en étant parallèles audit plan, si bien que chaque paire d'éléments en forme de crochets forme une ouverture (18); et en ce que les moyens récepteurs (15) sont disposés de manière à ce qu'au moins une partie de la longueur de la ligne a pêche (11) entre les ouvertures longe une surface longitudinale externe de l'élément flottant (14) lorsque la ligne (11) est tendue et que la ligne de pêche (11) vienne alors se plaquer contre l'élément flottant (14) de façon à ce que celui-ci se trouve immobilisé sur la ligne (11).

2. Combinaison selon la revendication 1, où l'élément flottant (14) a une forme allongée cylindrique.

3. Combinaison selon la revendication 1 ou 2, où l'élément flottant (14) est fait d'une paire de demipièces fixées ensemble suivant un plan central dudit élément (14).

4. Combinaison selon l'une quelconque des revendications qui précèdent, où l'élément flottant (14) a une longueur située entre trois et six pouces (76,2 à 152,4 mm).

5. Combinaison selon la revendication 4, où l'élément flottant (14) a des parois minces, un poids d'environ 0,23 onces (6,53 g) et une longueur d'environ trois pouces (76,2 mm).

6. Combinaison selon l'une quelconque des revendications qui précèdent, comprenant en outre un moyen de fixation (21) sur l'élément (14) agencé entre les extrémités opposées pour fixer une ligne de pêche sur l'élément flottant (14).

7. Combinaison selon la revendication 6, où le moyen de fixation (21) comprend une borne (22) faisant saillie sur l'élément flottant (14) pour recevoir au moins un enroulement de la ligne de pêche (11) et un couvercle (23) sur la borne (22) délimitant un creux annulaire (24) avec la borne (22) et l'élément flottant (14) pour y retenir l'enroulement de la ligne de pêche (11).

8. Combinaison selon l'une quelconque des revendications qui précèdent, où les éléments plats en forme de crochets (16, 17) sont élastiques pour permettre le passage transversal de la ligne de pêche (11) entre eux.

9. Combinaison selon la revendication 8, où chaque élément en forme de crochet (16, 17) comporte une protubérance transversale (19) faisant saillie dans le plan de l'autre élément de la paire pour retenir la ligne de pêche (11) dans l'ouverture (18) délimitée par la paire d'éléments.

10. Appareil pour mesurer la profondeur d'une étendue d'eau ayant une ligne flexible (11), un plomb (13) fixé sur une extrémité de la ligne (11) et un flotteur (10) monté de manière à pourvoir coulisser sur la ligne (11), le flotteur (10) comportant un élément flottant allongé (14) et au moins une paire de moyens récepteurs (15) en forme de crochets, ces moyens étant espacés et montés de préférence aux extrémités opposées de l'élément (14) pour définir chacun une ouverture (18) à travers laquelle peut passer d'une manière coulissante la ligne flexible captive (11), caractérisé en ce que chaque moyen récepteur (15) comporte une paire d'éléments parallèles, plats et en forme de crochets (16, 17) qui se font face, qui partent tous deux d'un élément (14) et qui sont situés chacun sur un côté d'un plan de symétrie (X) dudit élément (14) tout en étant parallèles audit plan, si bien que chaque paire d'éléments en forme de crochets forme une ouverture (18); et en ce que les moyens récépteurs (15) sont disposés pour qu'au moins une partie de la longueur de la ligne flexible (11) entre les ouvertures longe une surface longitudinale externe de l'élément flottant (14) lorsque la ligne (11) est tendue et que la ligne flexible (11) vienne alors se plaquer contre l'élément flottant (14) de façon à ce que celui-ci se trouve immobilisé sur la ligne (11).

11. Méthode pour déterminer la profondeur d'une étendue d'eau faisant appel à l'appareil revendiqué dans la revendication 10 comprenant les étapes suivantes: lancer de la ligne (11), du plomb (13) et du flotteur (10) sur la surface d'une étendue d'eau pour permettre au plomb (13) de tomber jusqu'au fond de l'eau sous l'effet de la gravité alors que la ligne (11) glisse sur le flotteur (10) qui reste à la surface de l'eau; puis récupération de la ligne (11) qui reste sous tension pendant cette opération pour plaquer la ligne (11) contre une surface longitudinale externe de l'élément flottant (14), si bien que celui-ci se trouvé immobilisé à un emplacement correspondant à la profondeur de l'eau; enfin marquage de l'emplacement occupé par le flotteur (10) immobilisé sur la ligne (11).

Fig.1.

Fig.2.

Fig.3.

Fig.4.

Fig. 5.

Fig. 8.

Fig. 7.

Fig. 9.

Fig. 6.